# FASCICULE DE BREVET EUROPEEN

(11) **EP 4 492 162 B1**
(45) Date de publication et mention de la délivrance du brevet: **18.03.2026**
(21) Numéro de dépôt: 23184372.3
(22) Date de dépôt: 10.07.2023
(51) Int. Cl.: G04G 17/06, G04G 21/08

(54) **PIÈCE D'HORLOGERIE À COMMANDE TACTILE COMPORTANT UN DISPOSITIF ANTIBUÉE**
BERÜHRUNGSEMPFINDLICHE UHR MIT ANTIBESCHLAGVORRICHTUNG
TIMEPIECE WITH TACTILE CONTROL COMPRISING AN ANTI-FOGGING DEVICE

(43) Date de publication de la demande: 15.01.2025
(73) Titulaire: The Swatch Group Research and Development Ltd, 2074 Marin (CH)
(72) Inventeur: MARTIN, Jean-Claude, 2037 Montmollin (CH)
(74) Mandataire: ICB SA

(56) Documents cités:
- CH-B1- 703 966
- CN-A- 113 015 399
- GB-A- 2 553 198
- JP-A- 2018 179 664

## Description

### Domaine technique de l'invention

La présente invention concerne une pièce d'horlogerie à commande tactile présentant un dispositif antibuée pour éviter ou limiter la formation de buée, ou de fines gouttelettes d'eau, à la surface interne de la glace de protection.

### Arrière-plan technologique

Les pièces d'horlogerie sont portées au quotidien dans des environnements très variables en terme d'humidité relative, de pression et de température. Une pièce d'horlogerie empêche structurellement l'humidité de pénétrer dans le corps principal, mais elle subit des échanges gazeux entre l'intérieur du corps principal et l'ambiance extérieure, et ce, malgré une étanchéité à l'eau assurée.

Cet échange gazeux, appelé perméation, se passe au travers des joints qui sont majoritairement en matériaux polymères dont la propriété de perméation est variable, mais jamais nulle. Il arrive donc régulièrement que dans des environnements très chauds et humides, de la vapeur d'eau pénètre dans une pièce d'horlogerie, ce qui en soit n'est pas un problème car invisible pour l'utilisateur tant qu'il n'y a pas de buée visible sur la face interne de la glace de protection.

La buée se forme le plus souvent au moment où la température vue par le porteur s'abaisse, par exemple en se baignant ou en entrant dans un environnement climatisé dans lequel la température est plusieurs degrés plus basse que précédemment. La glace de protection étant le point le plus en contact avec l'environnement extérieur, de fines gouttelettes d'eau formées par condensation adhèrent naturellement sur la surface interne de la glace de protection. Le porteur constate la présence de buée à l'intérieur de la pièce d'horlogerie et pense alors souvent, mais à tort, que son produit n'est plus étanche à l'eau. Ce phénomène est source de nombreux retours de marché, mais aussi de perte de confiance des usagers, et donc de dégradation d'image pour la marque horlogère.

Il existe des traitements hydrophiles consistant en l'application d'un agent tensioactif sur la surface interne de la glace de protection afin d'éviter l'adhérence de fines gouttelettes d'eau sur la surface de la glace de protection. En effet, ces couches hydrophiles permettent à l'eau de s'étaler sur toute la surface interne de la glace de protection et reste donc invisible par le porteur. Cependant, ces couches hydrophiles ne sont pas toujours compatibles avec une esthétique de qualité (coloration, effet diffusant, etc).

Il existe une autre méthode basée sur le principe d'absorption de l'eau contenue dans la vapeur pénétrant dans la pièce d'horlogerie. Toutefois, ces solutions sont limitées dans le temps et les capacités d'absorption sont limitées (en quantité). Par conséquent, ces solutions ne sont pas entièrement satisfaisantes.

Il existe donc un besoin d'amélioration de la capacité antibuée des glaces de protection et des pièces d'horlogerie équipées de telles glaces de protection, notamment lorsque la pièce d'horlogerie comporte une interface de commande tactile permettant à l'utilisateur de réaliser des fonctions en interagissant avec un écran via la glace de protection. En effet, la présence de buée sur ce genre de pièce d'horlogerie n'est pas acceptable pour l'utilisateur.

CN 113 015 399 A divulgue une pièce d'horlogerie comportant une boîte, ladite boîte étant fermée par un fond et par une glace de protection, ladite pièce d'horlogerie comportant un dispositif de commande tactile relié à une unité électronique configurée pour exécuter au moins une fonction prédéterminée de ladite pièce d'horlogerie sous l'action du dispositif de commande tactile, ledit dispositif de commande tactile comportant au moins un capteur capacitif comprenant une première armature formée par une électrode conductrice transparente, ménagée au moins sur une portion d'une face intérieure de la glace de protection, et une deuxième armature formée sélectivement par le positionnement du doigt du porteur de ladite pièce d'horlogerie sur une face extérieure de la glace de protection ; ladite électrode conductrice transparente étant reliée électriquement à ladite unité électronique par un premier conducteur électrique.

### Résumé de l'invention

A cette fin, la présente invention propose une solution pour répondre aux problématiques de l'état de la technique.

Dans ce contexte, l'invention propose une pièce d'horlogerie comportant une boîte formant une masse électrique, ladite boîte étant fermée par un fond et par une glace de protection, ladite pièce d'horlogerie comportant un dispositif de commande tactile relié à une unité électronique configurée pour exécuter au moins une fonction prédéterminée de ladite pièce d'horlogerie sous l'action du dispositif de commande tactile, ledit dispositif de commande tactile comportant au moins un capteur capacitif comprenant une première armature formée par une électrode conductrice transparente, ménagée au moins sur une portion d'une face intérieure de la glace de protection, et une deuxième armature formée sélectivement par le positionnement du doigt du porteur de ladite pièce d'horlogerie sur une face extérieure de la glace de protection ; ladite électrode conductrice transparente étant reliée électriquement à ladite unité électronique par un premier conducteur électrique.

La pièce d'horlogerie selon l'invention comporte en outre un dispositif antibuée de ladite glace de protection constitué en partie par ladite électrode conductrice transparente et par un deuxième conducteur électrique reliant en circuit fermé ladite électrode conductrice transparente à ladite unité électronique, ladite unité électronique comportant un module de gestion de courant électrique configuré pour générer un courant électrique contrôlé dans le circuit fermé permettant une mise en température par effet Joule de ladite électrode conductrice transparente.

Le courant électrique généré dans le circuit fermé par le module de gestion de courant électrique peut être amorcé par divers paramètres et informations, par exemple provenant de différents capteurs additionnels que comporte la pièce d'horlogerie.

Par exemple sur la base d'une information relative à son utilisation, son humidité interne, sur la température interne et/ou externe, ou simplement par intervalle régulier, le dispositif antibuée selon l'invention peut être mis en fonctionnement sans intervention de l'utilisateur.

La pièce d'horlogerie selon l'invention comporte un dispositif antibuée facile à mettre en œuvre permettant d'éviter la formation de buée sur la surface interne de la glace de protection ou de limiter/réduire la présence de buée visible suite à un choc thermique important.

Outre les caractéristiques évoquées dans le paragraphe précédent, la pièce d'horlogerie selon l'invention peut présenter une ou plusieurs caractéristiques complémentaires parmi les suivantes:
- ladite électrode conductrice transparente est une couche d'oxydes transparents conducteurs ;
- ladite électrode conductrice transparente comporte une couche d'oxydes transparents conducteurs et au moins une couche de compensation optique de ladite couche d'oxydes transparents conducteurs ;
- la couche d'oxydes transparents conducteurs est composée d'oxyde d'indium dopé à l'étain, d'oxyde de zinc dopé à l'aluminium, d'oxyde de zinc, ou encore de dioxyde d'étain dopé au fluor ;
- selon une alternative, ladite électrode conductrice transparente est une couche à base de nanofils d'argent ;
- selon une alternative, ladite électrode conductrice transparente est une couche à base nanotubes de carbone ;
- le module de gestion de courant électrique est configuré pour générer et/ou moduler un courant électrique contrôlé de mise en chauffe de l'électrode électrode conductrice transparente en fonction d'au moins une information provenant d'au moins un capteur que comporte la pièce d'horlogerie ;
- la pièce d'horlogerie comporte un accéléromètre relié à l'unité électronique permettant de fournir au module de gestion de courant électrique une information sur l'utilisation de la pièce horlogerie ;
- la pièce d'horlogerie comporte un capteur de température relié à ladite unité électronique permettant de fournir au module de gestion de courant électrique une information sur la température interne de ladite pièce d'horlogerie (100) et/ou sur la température de l'environnement extérieur de la pièce d'horlogerie ;
- la pièce d'horlogerie comporte un capteur d'humidité relié à ladite unité électronique permettant de fournir au module de gestion de courant électrique une information sur l'humidité à l'intérieur de ladite pièce d'horlogerie ;
- ledit dispositif de commande tactile comporte un réseau de capteurs capacitifs recouvrant la face intérieure de la glace de protection, ledit dispositif antibuée étant formé par au moins une partie des électrodes conductrices transparentes du réseau de capteurs capacitifs, ladite au moins une partie des électrodes conductrices transparentes du réseau de capteurs capacitifs, formant le dispositif antibuée, étant reliée à l'unité électronique par un premier conducteur électrique et par un deuxième conducteur électrique pour former une pluralité de circuits électriques fermés, le module de gestion de courant électrique étant configuré pour générer un courant électrique contrôlé dans chaque circuit fermé de la pluralité de circuits électriques fermés permettant une mise en température par effet Joule de ladite au moins une partie des électrodes conductrices transparentes du réseau de capteurs capacitifs.

### Brève description des figures

Les buts, avantages et caractéristiques de la présente invention apparaîtront à la lecture de la description détaillée ci-dessous faisant référence aux figures suivantes :
- la figure 1 représente schématiquement une vue en coupe d'une pièce d'horlogerie à commande tactile comportant un dispositif antibuée selon l'invention ;
- la figure 2 représente un schéma bloc du dispositif à commande tactile et du dispositif antibuée de la pièce d'horlogerie selon l'invention.

Dans toutes les figures, les éléments communs portent les mêmes numéros de référence sauf précision contraire.

### Description détaillée de l'invention

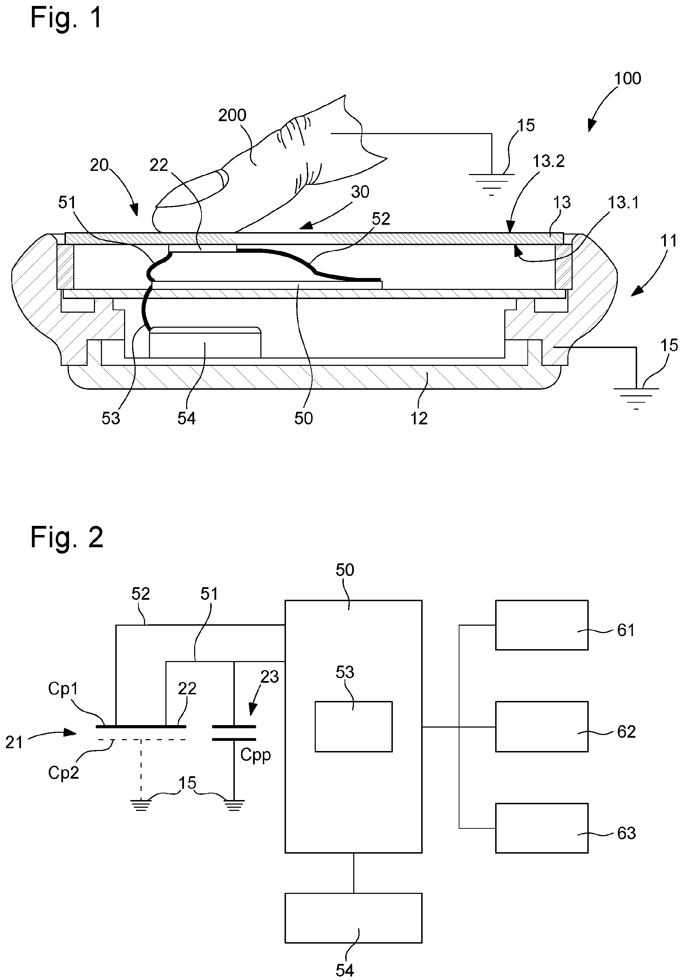

La figure 1 représente schématiquement une vue en coupe d'une pièce d'horlogerie 100 selon l'invention comportant un dispositif de commande tactile 20 et un dispositif antibuée 30.

La figure 2 représente un schéma bloc illustrant les moyens électroniques du dispositif à commande tactile 20 et du dispositif antibuée 30 de la pièce d'horlogerie 100 selon l'invention
La pièce d'horlogerie 100, telle qu'une montre bracelet, est destinée à être portée au contact de la peau de l'utilisateur, par exemple au poignet.

La pièce d'horlogerie 100 comporte une boîte destinée à recevoir un mouvement d'horlogerie (non représenté). Le mouvement d'horlogerie peut être un mouvement électromécanique ou encore électronique.

La boîte 11 est fermée en partie inférieure par un fond 12 et en partie supérieure par une glace de protection 13, de manière à protéger le mouvement d'horlogerie et les différents éléments intégrés dans la boîte 11.

La boîte 11 et/ou le fond 12 sont réalisés, au moins partiellement, dans une matière conductrice électriquement et forme ainsi au contact de la peau du porteur un potentiel électrique de référence, par exemple une masse électrique 15.

La pièce d'horlogerie 100 comporte également un bracelet (non représenté) souple ou articulé dont deux extrémités sont destinées à être couplées, par exemple de manière amovible, à la boîte 11, via un système de fixation ad hoc qui ne sera pas détaillé dans la présente demande, permettant à l'utilisateur de porter la pièce d'horlogerie 100, par exemple au poignet, et d'avoir la surface extérieure du fond 12 en contact avec la peau du porteur.

La pièce d'horlogerie 100 comporte une unité électronique 50 disposée dans la boîte 11, et reliée au dispositif de commande tactile 20.

Le dispositif de commande tactile 20 comporte au moins un capteur capacitif 21 présentant une première armature Cp1 constituée par une électrode conductrice transparente 22 disposée au moins sur une portion de la face intérieure 13.1 de la glace de protection 13.

Préférentiellement, l'électrode conductrice transparente 22 recouvre une grande partie de la face intérieure 13.1 de la glace de protection 13, et encore plus préférentiellement, la totalité de la face intérieure 13.1.

L'électrode conductrice transparente 22 est reliée à l'unité électronique 50 par un premier conducteur électrique 51. Ce premier conducteur électrique 51 relie une première extrémité de l'électrode conductrice transparente 22 à l'unité électronique 50.

La pièce d'horlogerie 100 intègre une source d'énergie électrique 54, par exemple une pile ou une batterie rechargeable, qui est reliée au pôle positif de l'unité électronique 50 par un conducteur 53.

Une deuxième armature Cp2 du capteur capacitif 21 est formée par le doigt 200 du porteur de la pièce d'horlogerie 100 lorsqu'il est positionné sur la face extérieure 13.2 de la glace de protection 13 en regard de l'électrode conductrice transparente 22, afin de réaliser une commande tactile pour exécuter une fonction prédéterminée de la pièce d'horlogerie 100.

Le doigt 200 du porteur est relié au potentiel électrique de référence, par exemple à la masse 15 de l'unité électronique 50, comme tout le corps du porteur, par l'intermédiaire de la boîte 11 et/ou du fond 12 qui est en contact avec le poignet de celui-ci et qui est relié aux pôles négatifs de l'unité électronique 50 et de la source d'énergie électrique 54.

Une capacité parasite Cpp est par construction présente entre l'électrode conductrice transparente 22 et son environnement. Cette capacité parasite Cpp est représentée sur la figure 2 par un condensateur 23 qui est branché en parallèle du capteur capacitif 21, entre le premier conducteur électrique 51 et le potentiel électrique de référence, par exemple la masse 15.

Lorsque le doigt 200 du porteur n'est pas posé sur la face extérieure 13.2 de la glace de protection 13, le capteur capacitif 21 n'est pas formé et l'unité de commande 50 détecte la capacité parasite Cpp du condensateur 23.

Lorsque le doigt 200 du porteur est posé sur la face extérieure 13.2 de la glace de protection 13, la deuxième armature Cp2 du capteur capacitif 21 est formée (en parallèle de la capacité parasite), l'unité électronique 50 détecte une capacité totale équivalente à la capacité du capteur capacitif 21 (prépondérante) additionnée de la capacité parasite Cpp, la détection de cette variation de capacité permet de réaliser une fonction prédéterminée de la pièce d'horlogerie.

Le fonctionnement de ce type de capteur capacitif étant largement connu, il n'est pas nécessaire d'en décrire davantage.

L'électrode conductrice transparente 22 est par exemple une couche d'oxydes transparents conducteurs (TCO, pour *Transparent Conductive Oxide en langue anglaise).*

Préférentiellement, la couche d'oxydes transparents conducteurs est déposée sur la face intérieure 13.1 de la glace de protection 13 par une méthode de dépôt chimique en phase vapeur (CVD) ou par une méthode de dépôt physique en phase vapeur (PVD). Toutefois, d'autres méthodes de dépôt de couches minces connues de l'homme du métier sont également possibles.

Par exemple, l'électrode conductrice transparente 22 est une couche d'oxydes transparents conducteurs composée d'oxyde d'indium dopé à l'étain, d'oxyde de zinc dopé à l'aluminium, d'oxyde de zinc, ou encore de dioxyde d'étain dopé au fluor.

L'électrode conductrice transparente 22 peut également comporter au moins une couche de compensation optique avec un indice optique adapté pour rendre encore plus transparente la couche d'oxydes transparents conducteurs, la structuration des oxydes transparents conducteurs pour former une électrode indépendante tendant à rendre la couche légèrement moins transparente. Ce type de compensation optique étant largement connu, il n'est pas nécessaire d'en décrire davantage.

Selon une variante de réalisation, l'électrode conductrice transparente 22 est une couche à base de nanofils d'argent.

Selon une variante de réalisation, l'électrode conductrice transparente 22 est une couche à base nanotubes de carbone.

La pièce d'horlogerie 100 comporte également un dispositif antibuée 30 de la glace de protection 13 permettant d'éviter la formation de buée sur la face intérieure 13.1, c'est-à-dire la face en regard avec le mouvement d'horlogerie ou de limiter/réduire la présence de buée visible suite à un choc thermique important.

Le dispositif antibuée 30 est un dispositif actif nécessitant une source d'énergie pour son fonctionnement.

Le dispositif antibuée 30 utilise avantageusement les propriétés thermiques et les propriétés de conduction électrique de ladite au moins une électrode conductrice transparente 22 déjà en place dans la pièce d'horlogerie 100 pour assurer une mise en température de la glace de protection 13, et éviter ainsi la formation de buée.

Par conséquent, le dispositif antibuée 30 est constitué en partie par l'électrode conductrice transparente 22 et comporte un deuxième conducteur 52 reliant une deuxième extrémité de l'électrode conductrice transparente 22 à l'unité électronique 50 de manière à former un circuit électrique fermé comprenant l'électrode conductrice transparente 22, les deux conducteurs électriques 51, 52 et l'unité électronique 50.

Le dispositif antibuée 30 comporte des moyens de connexion/déconnection pour connecter/déconnecter électriquement la deuxième extrémité de l'électrode conductrice transparente 22 de l'unité électronique 50. Ces moyens de connexion/déconnection sont, par exemple, des moyens électroniques embarqués sur l'unité électronique 50. Ces moyens de connexion/déconnection permettent de s'assurer d'une sensibilité optimum de l'interface tactile lorsque le dispositif antibuée 30 n'est pas actif.

Par exemple, lorsque l'interface de commande tactile est utilisée, les moyens de connexion/déconnection reçoivent une information du capteur capacitif 20 et désactivent la liaison électrique entre la deuxième extrémité de l'électrode conductrice transparente 22 et l'unité électronique 50.

Par exemple, la liaison électrique entre la deuxième extrémité de l'électrode conductrice transparente 22 et l'unité électronique 50 est désactivée par défaut permettant un accès selon les besoins de l'utilisateur à l'interface tactile de la pièce d'horlogerie 100.

Par exemple, l'unité électronique 50 comporte des moyens pour programmer à intervalle régulier, par exemple deux fois par jour, et pour autant que l'interface tactile n'est pas utilisée, l'activation automatisé et régulière de la liaison électrique entre la deuxième extrémité de l'électrode conductrice transparente 22 et l'unité électronique 50 durant un laps de temps déterminé, par exemple de l'ordre d'une dizaine de secondes, afin de réduire, voire de supprimer, une possible buée sur la face intérieure de la glace de protection 13.

Par exemple, l'activation de la liaison électrique entre la deuxième extrémité de l'électrode conductrice transparente 22 et l'unité électronique 50 peut être réalisé suite à la réception d'une information d'un capteur additionnel de la pièce d'horlogerie 100 indiquant un changement d'état consécutif d'un risque de formation de buée ou la formation de buée.

Le dispositif antibuée 30 comporte également un module de gestion de courant électrique 53 intégré dans l'unité électronique 50 de la pièce d'horlogerie 100, configuré pour générer un courant électrique contrôlé dans le circuit électrique fermé permettant une mise en température par effet Joule de l'électrode conductrice transparente 22.

Ainsi, la pièce d'horlogerie 100 permet de créer un chauffage actif régulé et contrôlé de la glace de protection 13 évitant la formation de buée tout en permettant la réalisation d'un dispositif de commande tactile.

Le courant électrique généré par le module de gestion de courant électrique 53 dans le circuit électrique fermé peut être amorcé et modulé par divers paramètres et informations, par exemple provenant de différents capteurs que comporte la pièce d'horlogerie.

Par exemple, la mise en chauffe de l'électrode conductrice transparente 22 peut être réalisée par intervalle régulier, en combinaison ou en alternative avec une information provenant d'au moins un capteur additionnel présent dans la pièce d'horlogerie.

Le module de gestion de courant électrique 53 peut également détecter via le dispositif de commande tactile 20 un brusque changement des valeurs capacitives du capteur capacitif 21 par la présence d'eau condensée et mettre en chauffe l'électrode conductrice transparente 22 dès qu'une certaine valeur est atteinte.

Par exemple, la pièce d'horlogerie 100 peut comporter un accéléromètre 61 relié à l'unité électronique 50. Un tel accéléromètre 61 permet de fournir au module de gestion de courant électrique 53 une information sur les mouvements de la pièce d'horlogerie 100 et donc sur l'utilisation ou non de la pièce horlogerie 100 par le porteur. Ainsi, il est possible de déclencher le chauffage de la glace de protection 13 uniquement lorsque la montre est portée, évitant ainsi une consommation inutile d'énergie.

Par exemple, de façon additionnelle ou en alternative, la pièce d'horlogerie 100 peut comporter un capteur de température 62 relié à l'unité électronique 50. Un tel capteur de température permet de fournir au module de gestion de courant électrique 53 une information sur la température interne de ladite pièce d'horlogerie 100 et/ou sur la température de l'environnement extérieur. Par exemple, une température consigne peut être définie pour déclencher la mise en chauffe de l'électrode conductrice transparente 22 par génération de courant, et donc de la glace de protection 13.

Par exemple, de façon additionnelle ou en alternative, la pièce d'horlogerie 100 peut comporter un capteur d'humidité 63 relié à l'unité électronique 50. Un tel capteur d'humidité intégré dans la boîte 11 permet de fournir au module de gestion de courant électrique 53 une information sur l'humidité à l'intérieur de ladite pièce d'horlogerie 100. Ainsi un taux d'humidité consigne peut être défini pour déclencher la mise en chauffe de l'électrode conductrice transparente 22 par génération de courant, et donc de la glace de protection 13.

Le module de gestion de courant électrique 53 est configuré pour moduler le courant électrique de mise en chauffe de l'électrode conductrice transparente 22 en fonction des différentes informations des différents capteurs présents dans la pièce d'horlogerie, afin d'optimiser la consommation du dispositif antibuée 30.

Le dispositif de commande tactile 20 peut comporter une pluralité de capteurs capacitifs 21 et donc une pluralité d'électrodes conductrices transparentes 22 sur la face intérieure 13.1 de la glace de protection 13 formant ainsi un réseau de capteurs capacitifs 21. Un tel réseau permet avantageusement de pouvoir activer différentes fonctions de manière sélective, ou de pouvoir détecter des suites de mouvements du doigt 200 du porteur (glissé horizontal, glissé vertical, combinaison d'activation de deux ou plusieurs capteurs simultanément, etc).

Dans un telle variante de réalisation, au moins une partie des électrodes conductrices transparentes 22 du réseau de capteurs capacitifs 21 est alors utilisée par le dispositif antibuée 30 selon l'invention.

Dans ce cas, au moins une partie des électrodes conductrices transparentes 22 du réseau de capteurs capacitifs 21, formant une première sélection, est reliée à l'unité électronique 50 par un premier conducteur 51 et par un deuxième conducteur 52 pour former une pluralité de circuits électriques fermés et permettre une mise en température par effet Joule des électrodes conductrices transparentes 22 formant la première sélection.

Il est également possible de prévoir une autre partie des électrodes conductrices transparentes 22 du réseau de capteurs capacitifs 21, formant une deuxième sélection différente de la première sélection, également reliée à l'unité électronique 50 par un premier conducteur 51 et par un deuxième conducteur 52 pour former une deuxième pluralité de circuits électriques fermés et permettre une mise en température par effet Joule des électrodes conductrices transparentes 22 formant la deuxième sélection.

Il est également possible de prévoir que chacune des électrodes conductrices transparentes 22 du réseau de capteurs capacitifs 21 est reliée à l'unité électronique 50 par un premier conducteur 51 et par un deuxième conducteur 52 pour former une pluralité de circuits électriques fermés et permettre une mise en température par effet Joule de chaque électrode conductrice transparente 22 du réseau de capteurs capacitifs 21.

Ainsi, le module de gestion de courant électrique 53 peut être configuré pour alimenter électriquement toute les électrodes conductrices transparentes 22 d'un réseau, uniquement une sélection prédéterminée d'électrodes conductrices transparentes 22 d'un réseau de capteurs capacitifs 21, ou encore différentes sélections d'électrodes conductrices transparentes 22, de manière simultanée ou séquentielle (par sélection ou par électrode) pour limiter les pics de consommation sur la source d'énergie 54 tout en optimisant l'étendue de la mise en chauffe de la face intérieure 13.1 de la glace de protection 13.

Il est également envisagé de mettre en chauffe de manière séquentielle l'ensemble des électrodes conductrices transparentes 22 d'un réseau de capteurs capacitifs 21 selon un motif de mise en chauffe particulier.

## Revendications

1. Pièce d'horlogerie (100) comportant une boîte (11) formant une masse électrique (15), ladite boîte (11) étant fermée par un fond (12) et par une glace de protection (13), ladite pièce d'horlogerie comportant un dispositif de commande tactile (20) relié à une unité électronique (50) configurée pour exécuter au moins une fonction prédéterminée de ladite pièce d'horlogerie (100) sous l'action du dispositif de commande tactile (20), ledit dispositif de commande tactile (20) comportant au moins un capteur capacitif (21) comprenant une première armature (Cp1) formée par une électrode conductrice transparente (22), ménagée au moins sur une portion d'une face intérieure (13.1) de la glace de protection (13), et une deuxième armature (Cp2) formée sélectivement par le positionnement du doigt (200) du porteur de ladite pièce d'horlogerie (100) sur une face extérieure (13.2) de la glace de protection (13) ; ladite électrode conductrice transparente (22) étant reliée électriquement à ladite unité électronique (50) par un premier conducteur électrique (51) ;
où la pièce d'horlogerie (100) comporte un dispositif antibuée (30) de ladite glace de protection (13) constitué en partie par ladite électrode conductrice transparente (22) et par un deuxième conducteur électrique (52) reliant en circuit fermé ladite électrode conductrice transparente (22) à ladite unité électronique (50), ladite unité électronique (50) comportant un module de gestion de courant électrique (53) configuré pour générer un courant électrique contrôlé dans le circuit fermé permettant une mise en température par effet Joule de ladite électrode conductrice transparente (22).

2. Pièce d'horlogerie (100) selon la revendication précédente, **caractérisée en ce que** ladite électrode conductrice transparente (22) est une couche d'oxydes transparents conducteurs.

3. Pièce d'horlogerie (100) selon la revendication 1, **caractérisée en ce que** ladite électrode conductrice transparente (22) comporte une couche d'oxydes transparents conducteurs et au moins une couche de compensation optique de ladite couche d'oxydes transparents conducteurs.

4. Pièce d'horlogerie (100) selon l'une des revendications 2 ou 3, **caractérisée en ce que** la couche d'oxydes transparents conducteurs est composée d'oxyde d'indium dopé à l'étain, d'oxyde de zinc dopé à l'aluminium, d'oxyde de zinc, ou encore de dioxyde d'étain dopé au fluor.

5. Pièce d'horlogerie (100) selon la revendication 1, **caractérisée en ce que** ladite électrode conductrice transparente (22) est une couche à base de nanofils d'argent.

6. Pièce d'horlogerie (100) selon la revendication 1, **caractérisée en ce que** ladite électrode conductrice transparente (22) est une couche à base nanotubes de carbone.

7. Pièce d'horlogerie (100) selon l'une des revendications précédentes, **caractérisée en ce que** le module de gestion de courant électrique (53) est configuré pour générer et/ou moduler un courant électrique contrôlé de mise en chauffe de l'électrode électrode conductrice transparente (22) en fonction d'au moins une information provenant d'au moins un capteur (61, 62, 63) que comporte la pièce d'horlogerie (100).

8. Pièce d'horlogerie (100) selon la revendication 7, **caractérisée en ce qu'**elle comporte un accéléromètre (61) relié à ladite unité électronique (50) permettant de fournir au module de gestion de courant électrique (53) une information sur l'utilisation de la pièce horlogerie (100).

9. Pièce d'horlogerie (100) selon l'une des revendications 7 à 8, **caractérisée en ce qu'**elle comporte un capteur de température (62) relié à ladite unité électronique (50) permettant de fournir au module de gestion de courant électrique (53) une information sur la température interne de ladite pièce d'horlogerie (100) et/ou sur la température de l'environnement extérieur de la pièce d'horlogerie (100).

10. Pièce d'horlogerie (100) selon l'une des revendications 7 à 9, **caractérisée en ce qu'**elle comporte un capteur d'humidité (63) relié à ladite unité électronique (50) permettant de fournir au module de gestion de courant électrique (53) une information sur l'humidité à l'intérieur de ladite pièce d'horlogerie (100).

11. Pièce d'horlogerie (100) selon l'une des revendications précédentes, **caractérisée en ce que** ledit dispositif de commande tactile (20) comporte un réseau de capteurs capacitifs (21) recouvrant la face intérieure (13.1) de la glace de protection (13), ledit dispositif antibuée (30) étant formé par au moins une partie des électrodes conductrices transparentes (22) du réseau de capteurs capacitifs (21), ladite au moins une partie des électrodes conductrices transparentes (22) du réseau de capteurs capacitifs (21) étant reliée à l'unité électronique (50) par un premier conducteur électrique (51) et par un deuxième conducteur électrique (52) pour former une pluralité de circuits électriques fermés, le module de gestion de courant électrique (53) étant configuré pour générer un courant électrique contrôlé dans chaque circuit fermé de la pluralité de circuits électriques fermés permettant une mise en température par effet Joule de ladite au moins une partie des électrodes conductrices transparentes (22) du réseau de capteurs capacitifs (21).

## Patentansprüche

1. Uhrwerkteil (100) umfassend ein Gehäuse (11), das eine elektrische Masse bildet (15), wobei dieses Gehäuse (11) durch einen Boden (12) und eine Schutzscheibe (13) geschlossen ist, wobei dieses Uhrwerkteil mit einer Touchscreen-Steuerung (20) verbunden ist, die mit einer elektronischen Einheit (50) verbunden ist, die so konfiguriert ist, dass sie mindestens eine vorbestimmte Funktion dieses Uhrwerkteils (100) unter Betätigung des Touchscreen-Steuergeräts (20) ausübt, wobei dieses Touchscreen-Steuergerät (20) mindestens einen kapazitiven Sensor (21) umfasst, der eine erste Trägerstruktur (Cp1) umfasst, die durch eine transparente Leiterelektrode (22) gebildet wird, die mindestens auf einer Portion der Innenseite (13.1) der Schutzscheibe (13) angebracht ist, und eine zweite Trägerstruktur (Cp2), die selektiv durch die Positionierung des Fingers (200) des Trägers des Uhrwerks (100) auf einer Außenseite (13.2) der Schutzscheibe (13) gebildet wird; wobei diese transparente Leiterelektrode (22) elektrisch durch einen ersten elektrischen Leiter (51) mit dieser elektronischen Einheit (50) verbunden ist;
bei der das Uhrwerk (100) eine Vorrichtung umfasst,
die (30) dieser Schutzscheibe (13) zugewiesen ist, bestehend aus dieser transparenten Leiterelektrode (22) und einem zweiten elektrischen Leiter (52), der eine geschlossene Verbindung zwischen dieser transparenten Leiterelektrode (22) und dieser elektronischen Einheit (50) umfasst, wobei diese elektronische Einheit (50) ein Steuermodul für Strom (53) umfasst, das für die Erzeugung eines kontrollierten Stroms im geschlossenen Stromkreis ausgelegt ist, der eine Erwärmung der transparenten Leiterelektrode (22) durch den Joule-Effekt ermöglicht.

2. Uhrwerkteil (100) nach dem vorstehenden Anspruch, **dadurch gekennzeichnet, dass** diese transparente Leiterelektrode (22) eine Schicht von transparenten leitenden Oxiden ist.

3. Uhrwerkteil (100) nach Anspruch 1, **dadurch gekennzeichnet, dass** diese transparente Leiterelektrode (22) eine Schicht aus transparenten leitenden Oxyden und mindestens eine Kompensierungsschicht dieser leitenden durchsichtigen Oxidschicht umfasst.

4. Uhrwerkteil (100) nach einem der Ansprüche 2 oder 3, **dadurch gekennzeichnet, dass** die Schicht aus transparenten leitenden Oxiden aus mit Zinn dotiertem Indiumoxid, mit Aluminium dotiertem Zinkoxid, Zinkoxid oder mit Fluor dotiertem Zinndioxid besteht.

5. Uhrwerkteil (100) nach Anspruch 1, **dadurch gekennzeichnet, dass** diese transparente Leiterelektrode (22) eine Schicht auf der Basis von Silbernanodrähten ist.

6. Uhrwerkteil (100) nach Anspruch 1, **dadurch gekennzeichnet, dass** diese transparente Leiterelektrode (22) eine Schicht auf der Basis von Kohlenstoffnanoröhren ist.

7. Uhrwerkteil (100) nach einem der vorstehenden Ansprüche, **dadurch gekennzeichnet, dass** das Steuermodul für Strom (53) konfiguriert ist, um einen kontrollierten elektrischen Strom zum Erhitzen der transparenten Leiterelektrode (22) entsprechend mindestens einer Information aus mindestens einem Sensor (61, 62, 63) des Uhrwerks (100) zu erzeugen und/oder zu modulieren.

8. Uhrwerkteil (100) nach Anspruch 7, **dadurch gekennzeichnet, dass** es einen Beschleunigungsmesser (61) umfasst, der mit dieser elektronischen Einheit (50) verbunden ist und das elektrische Strommanagementmodul (53) mit Informationen über die Verwendung des Uhrwerks (100) versorgen kann.

9. Uhrwerkteil (100) nach einem der vorstehenden Ansprüche 7 bis 8, **dadurch gekennzeichnet, dass** es einen Temperatursensor (62) umfasst, der mit dieser elektronischen Einheit (50) verbunden ist und es ermöglicht, das elektrische Steuergerät (53) mit Informationen über die Innentemperatur des Uhrwerks (100) und/oder die Temperatur der Außenumgebung des Uhrwerks (100) zu versorgen.

10. Uhrwerkteil (100) nach einem der Ansprüche 7 bis 9, **dadurch gekennzeichnet, dass** es einen Feuchtigkeitssensor (63) umfasst, der mit der elektronischen Einheit (50) verbunden ist und es ermöglicht, das Strommanagementmodul (53) mit Informationen über die Feuchtigkeit im Inneren des Uhrwerkteils (100) zu versorgen.

11. Uhrwerk (100) nach einem der vorstehenden Ansprüche, **dadurch gekennzeichnet, dass** das Touchscreen-Steuergerät (20) ein Netzwerk von kapazitiven Sensoren (21) umfasst, die die Innenseite (13.1) der Schutzscheibe (13) abdecken, wobei die Antibeschlagvorrichtung (30) durch mindestens einen Teil der transparenten Leiterelektroden (22) des Netzwerks kapazitiver Sensoren (21) gebildet wird, wobei mindestens ein Teil der transparenten Leiterelektroden (22) des Netzwerks kapazitiver Sensoren (21) mit der elektronischen Einheit (50) durch einen ersten elektrischen Leiter (51) und einen zweiten elektrischen Leiter (52) verbunden ist, um eine Vielzahl von geschlossenen Stromkreisen zu bilden, wobei das Strommanagementmodul (53) so konfiguriert ist, dass in jedem geschlossenen Stromkreis der Vielzahl von geschlossenen Stromkreisen ein kontrollierter Strom erzeugt wird, der eine Erwärmung durch den Joule-Effekt dieses mindestens einen Teils der transparenten Leiterelektroden (22) des Netzwerks kapazitiver Sensoren (21) ermöglicht.

## Claims

1. A timepiece (100) comprising a case (11) forming an electrical mass (15), said case (11) being closed by a back (12) and by a protective glass (13), said timepiece comprising a tactile control device (20) connected to an electronic unit (50) configured to execute at least one predetermined function of said timepiece (100) under the action of the tactile control device (20), said tactile control device (20) comprising at least one capacitive sensor (21) comprising a first armature (Cp1) formed by a transparent conductive electrode (22), formed at least on a portion of an internal face (13.1) of the protective glass (13), and a second armature (Cp2) formed selectively by the positioning of the finger (200) of the wearer of said timepiece (100) on an external face (13.2) of the protective glass (13); said transparent conductive electrode (22) being electrically connected to said electronic unit (50) by a first electrical conductor (51);
where the timepiece (100) comprises an anti-fog device (30) of said protective glass (13) formed in part by said transparent conductive electrode (22) and by a second electrical conductor (52) connecting said transparent conductive electrode (22) to said electronic unit (50) in a closed circuit, said electronic unit (50) comprising an electric current management module (53) configured to generate a controlled electric current in the closed circuit enabling said transparent conductive electrode (22) to heat up by Joule effect.

2. The timepiece (100) according to the preceding claim, **characterised in that** said transparent conductive electrode (22) is a layer of transparent conductive oxides.

3. The timepiece (100) according to claim 1, **characterised in that** said transparent conductive electrode (22) comprises a layer of transparent conductive oxides and at least one layer for optical compensation of said layer of transparent conductive oxides.

4. The timepiece (100) according to one of claims 2 or 3, **characterised in that** the layer of transparent conductive oxides is composed of tin-doped indium oxide, aluminium-doped zinc oxide, zinc oxide or fluorine-doped tin dioxide.

5. The timepiece (100) according to claim 1, **characterised in that** said transparent conductive electrode (22) is a layer based on silver nanowires.

6. The timepiece (100) according to claim 1, **characterised in that** said transparent conductive electrode (22) is a carbon nanotube-based layer.

7. The timepiece (100) according to one of the preceding claims, **characterised in that** the electric current management module (53) is configured to generate and/or modulate a controlled electric current for heating the transparent conductive electrode (22) as a function of at least one piece of information originating from at least one sensor (61, 62, 63) that the timepiece (100) comprises.

8. The timepiece (100) according to claim 7, **characterised in that** it comprises an accelerometer (61) connected to said electronic unit (50) enabling information on the use of the timepiece (100) to be supplied to the electric current management module (53).

9. The timepiece (100) according to one of claims 7 to 8, **characterised in that** it comprises a temperature sensor (62) connected to said electronic unit (50) allowing supplying the electric current management module (53) with information on the internal temperature of said timepiece (100) and/or on the temperature of the environment outside the timepiece (100).

10. The timepiece (100) according to one of claims 7 to 9, **characterised in that** it comprises a humidity sensor (63) connected to said electronic unit (50) enabling information on the humidity inside said timepiece (100) to be supplied to the electric current management module (53).

11. The timepiece (100) according to one of the preceding claims, **characterised in that** said tactile control device (20) comprises an array of capacitive sensors (21) covering the internal face (13.1) of the protective glass (13), said anti-fog device (30) being formed by at least some of the transparent conductive electrodes (22) of the capacitive sensor array (21), said at least some of the transparent conductive electrodes (22) of the capacitive sensor array (21) being connected to the electronic unit (50) by a first electrical conductor (51) and by a second electrical conductor (52) to form a plurality of closed electrical circuits, the electric current management module (53) being configured to generate a controlled electric current in each closed circuit of the plurality of closed electrical circuits enabling said at least some of the transparent conductive electrodes (22) of the capacitive sensor array (21) to be heated by Joule effect.
